# EUROPÄISCHE PATENTANMELDUNG

(11) **EP 4 851 450 A1**
(43) Veröffentlichungstag der Anmeldung: **09.12.2026**
(21) Anmeldenummer: 26182406.4
(22) Anmeldetag: 01.06.2026
(51) Int. Cl.: F02D 41/22, F02D 35/02, F02D 41/14, G01M 15/08, G01M 15/12, F02D 41/28

(54) **VERFAHREN ZUM BETREIBEN EINER BRENNKRAFTMASCHINE, STEUERVORRICHTUNG FÜR EINE BRENNKRAFTMASCHINE UND BRENNKRAFTMASCHINE**

(30) Priorität: 06.06.2025 DE 102025122472
(71) Anmelder: Rolls-Royce Solutions GmbH, 88045 Friedrichshafen (DE)
(72) Erfinder: Gorontzi, Philipp, 88045 Friedrichshafen (DE)
(74) Vertreter: Gleiss Große Schrell und Partner mbB

(57) **Zusammenfassung**

Die Erfindung betrifft ein Verfahren zum Betreiben einer Brennkraftmaschine (1), die mindestens einen Brennraum (5) aufweist, in dem ein Kolben (7) von einer Maximalvolumen-Position in eine Minimalvolumen-Position verlagerbar angeordnet ist, um eine Kompression eines Gasgemischs in dem Brennraum (5) zu bewirken, wobei
- mittels eines Motorsensors (9), der angeordnet und eingerichtet ist zur Erfassung von Vibrationen des Brennraums (5), ein Sensorsignal erfasst wird, und wobei
- eine Kompression in dem Brennraum (5) anhand des Sensorsignals bewertet wird.

## Beschreibung

Die Erfindung betrifft ein Verfahren zum Betreiben einer Brennkraftmaschine, eine Steuervorrichtung für eine Brennkraftmaschine und eine Brennkraftmaschine.

Im Betrieb einer Brennkraftmaschine kann es zu einem Kompressionsverlust oder einer Reduktion der Kompression kommen, wenn ein Brennraum beispielsweise aufgrund einer Beschädigung oder einem Verschleiß von Kolbenringen undicht wird, oder wenn sich ein von einem in dem Brennraum verlagerbaren Kolben überstrichenes Kompressionsvolumen des Brennraums vergrößert, beispielsweise durch Stauchung eines Pleuels. Zu einer solchen Pleuelstauchung kann es beispielsweise kommen, wenn die angesaugte Luft flüssiges Wasser enthält und somit während der Kompression versucht wird, Wasser zu komprimieren. Ein Brennraum, bei dem Kompressionsverlust aufgetreten oder Kompression reduziert ist, kann nicht mehr mit dem eigentlich vorgesehenen Wirkungsgrad betrieben werden, und die Leistung der Brennkraftmaschine ist insgesamt reduziert. Es ist daher wünschenswert, den Kompressionsverlust oder die Reduktion der Kompression im Betrieb der Brennkraftmaschine erkennen zu können. Grundsätzlich ist dies in einfacher Weise durch die Verwendung von Brennraumdrucksensoren möglich; diese sind allerdings teuer und in der Regel nur an Prüfständen, nicht jedoch in Serienversionen von Brennkraftmaschinen vorgesehen. Es besteht daher ein Bedarf an einer zuverlässigen, kostengünstigen und bevorzugt nachrüstbaren Möglichkeit, einen Kompressionsverlust oder eine reduzierte Kompression zu detektieren.

Der Erfindung liegt daher die Aufgabe zugrunde, ein Verfahren zum Betreiben einer Brennkraftmaschine, eine Steuervorrichtung für eine Brennkraftmaschine und eine Brennkraftmaschine zu schaffen, wobei die zuvor beschriebenen Nachteile zumindest reduziert sind, vorzugsweise nicht auftreten.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten bevorzugten Ausführungsformen.

Die Aufgabe wird insbesondere in einem ersten Aspekt gelöst, indem ein Verfahren zum Betreiben einer Brennkraftmaschine, die mindestens einen Brennraum aufweist, in dem ein Kolben von einer Maximalvolumen-Position in eine Minimalvolumen-Position verlagerbar angeordnet ist, um eine Kompression eines Gasgemischs in dem Brennraum zu bewirken, geschaffen wird, wobei
- mittels eines Motorsensors, der angeordnet und eingerichtet ist zur Erfassung von Vibrationen des Brennraums, ein Sensorsignal erfasst wird, und wobei
- eine Kompression in dem Brennraum anhand des Sensorsignals bewertet wird.

Mittels des Motorsensors ist es bei dem hier vorgeschlagenen Verfahren in einfacher und zuverlässiger Weise möglich, die Kompression in dem Brennraum zu bewerten und in der Folge - anhand der Bewertung oder als Ergebnis der Bewertung - insbesondere einen Kompressionsverlust oder eine reduzierte Kompression festzustellen oder hierauf geeignet zu reagieren. Zugleich sind Motorsensoren, die eingerichtet sind zur Erfassung von Vibrationen des Brennraums kostengünstig, typischerweise in der ein oder anderen Ausgestaltung bereits an Brennkraftmaschinen auch in der Serienversion verbaut oder leicht nachrüstbar, insbesondere da sie nicht in den Brennraum integriert werden müssen beziehungsweise keinen Zugang zu einem Inneren des Brennraums benötigen. In der Regel bedarf es für die Nachrüstung der Bewertungsfunktion der Kompression sogar lediglich einer Ertüchtigung einer Steuerung der Brennkraftmaschine, die beispielsweise in Form eines Software-Updates erfolgen kann.

Insbesondere ist der Kolben von der Maximalvolumen-Position in die Minimalvolumen-Position verlagerbar. Der Kolben überstreicht das Kompressionsvolumen bei seiner Verlagerung zwischen der Maximalvolumen-Position und der Minimalvolumen-Position. Somit wird unter dem Kompressionsvolumen vorliegend eine Volumendifferenz zwischen einem Maximalwert des Innenvolumens und einem Minimalwert des Innenvolumens des Brennraums verstanden. Unter dem Innenvolumen wird ein Volumen verstanden, das in dem Brennraum durch den Kolben und mindestens eine Brennraumwandung, beispielsweise eine Wandung eine Zylinderlaufbuchse und eine Brennraumdecke, begrenzt ist, und dessen momentaner Wert somit von der momentanen Kolbenposition abhängt. Das Innenvolumen weist seinen Maximalwert auf, wenn der Kolben in der Maximalvolumen-Position angeordnet ist, und es weist seinen Minimalwert auf, wenn der Kolben in der Minimalvolumen-Position angeordnet ist.

In einer Ausgestaltung ist die Brennkraftmaschine als Hubkolbenmotor ausgebildet. In diesem Fall ist der Kolben von der Maximalvolumen-Position zu der Minimalvolumen-Position und zurück verlagerbar, insbesondere hubbeweglich, vorzugsweise linear, vorzugsweise repetierbar oder wiederholbar. Die Maximalvolumen-Position entspricht dabei einem unteren Totpunkt, und die Minimalvolumen-Position entspricht einem oberen Totpunkt des Kolbens.

In einer anderen Ausgestaltung ist die Brennkraftmaschine als Rotationskolbenmotor - auch als Kreiskolbenmotor oder Wankelmotor bezeichnet - ausgebildet. In diesem Fall variiert das Innenvolumen periodisch in Abhängigkeit von einer momentanen Winkelposition des rotierenden Kolbens.

In einer Ausführungsform wird das Sensorsignal in einem Kompressionstakt erfasst; alternativ zusätzlich wird das Sensorsignal - im Zeit- oder Kurbelwellenwinkelbereich - in einem Auswertungsfenster erfasst und/oder ausgewertet, wobei das Auswertungsfenster den Kompressionstakt umfasst oder zumindest bereichsweise in dem Kompressionstakt liegt.

Alternativ oder zusätzlich wird das Sensorsignal im Frequenzbereich gefiltert, insbesondere um einen für die Bewertung der Kompression relevanten Frequenzbereich zu isolieren, vorzugsweise mittels eines Tiefpassfilters und/oder mittels eines Hochpassfilters. In einer bevorzugten Ausgestaltung wird das Sensorsignal mit einem Tiefpassfilter gefiltert, der vorzugsweise eine Grenzfrequenz von 200 Hz aufweist. Dies hat sich als vorteilhaft herausgestellt, da eine Fourier-Analyse zeigt, dass typischerweise die höchsten Energiebeiträge des Sensorsignals im niedrigen Frequenzbereich, insbesondere unterhalb von 200 Hz, liegen.

Alternativ oder zusätzlich wird das Sensorsignal geglättet, renormiert und/oder derart beschnitten, sodass es nur noch mindestens ein vorbestimmtes Zeit- oder Kurbelwinkelfenster umfasst. Beispielsweise kann gezielt ein Bereich der Verbrennung ausgespart werden; alternativ oder zusätzlich kann gezielt ein Bereich ausgespart werden, in dem ein Gaswechselventil des Brennraums, das heißt ein Einlassventil oder ein Auslassventil, öffnet oder schließt, da derartige Ereignisse das Sensorsignal beeinflussen können. Das Sensorsignal kann alternativ oder zusätzlich auch auf andere Weise bearbeitet, verrechnet oder umgerechnet werden.

Der Motorsensor ist insbesondere eingerichtet zur Erfassung von hochfrequenten Vibrationen, insbesondere in einem Bereich von 1 Hz bis 20 kHz, vorzugsweise von 2 Hz bis 18 kHz, vorzugsweise von 3 Hz bis 15 kHz, vorzugsweise von 4 Hz bis 12 kHz, vorzugsweise von 5 Hz bis 10 kHz, insbesondere von 10 Hz bis 5 kHz, vorzugsweise von 100 Hz bis 5 kHz.

In einer Ausführungsform wird das Sensorsignal in genau einem Arbeitsspiel erfasst und anhand dieses Sensorsignals wird die Kompression bewertet. Alternativ ist es möglich, dass das Sensorsignal in einer Mehrzahl an Arbeitsspielen erfasst wird und hieraus insgesamt die Kompression bewertet wird. Insbesondere kann das Sensorsignal hierzu über die Mehrzahl an Arbeitsspielen gemittelt oder in anderer geeigneter Weise verrechnet werden, insbesondere um den Einfluss von Schwankungen oder Streuungen zu minimieren.

Gemäß einer Weiterbildung der Erfindung ist vorgesehen, dass als der Motorsensor ein Sensor verwendet wird, der ausgewählt ist aus der Gruppe, bestehend aus einem Klopfsensor, einem Körperschallsensor, einem Motor-Geräuschsensor, einem piezoelektrischen Sensor, einem Mikrophon, einem Ultraschallsensor, einem Beschleunigungssensor - insbesondere einem Accelerometer -, einem Vibrationssensor, und einer Kombination aus wenigstens zwei der genannten Sensoren. Diese Sensoren sind in besonderer Weise geeignet zur einfachen und funktionssicheren Erfassung von Vibrationen des Brennraums.

In einer Ausführungsform ist vorgesehen, dass als der Motorsensor kein Drucksensor verwendet wird. Somit wird die Verwendung einer teuren und typischerweise zumindest in Serie nicht verbauten Technologie vermieden. Alternativ oder zusätzlich wird im Rahmen des Verfahrens kein Drucksensor verwendet. Somit wird auch deutlich, dass die Kompression in dem Brennraum bevorzugt indirekt bewertet wird. Es wird also nicht unmittelbar eine mit der Kompression in direktem Zusammenhang stehende Größe - wie das Brennraumvolumen oder ein Brennraumdruck, Brennraumdruckwert oder Kompressionsverhältnis - gemessen, sondern vielmehr eine Größe in Form des Sensorsignals, aus der sich indirekt eine Aussage über die Kompression ableiten lässt. Insbesondere dies ermöglicht in überraschender Weise eine einfache, kostengünstige und gleichwohl funktionssichere Bewertung der Kompression.

Gemäß einer Weiterbildung der Erfindung ist vorgesehen, dass anhand des Sensorsignals mindestens ein Brennraumdruckwert ermittelt und die Kompression in dem Brennraum anhand des mindestens einen Brennraumdruckwerts bewertet wird. Vorteilhaft wird auf diese Weise aus dem Sensorsignal auf den mindestens einen Brennraumdruckwert geschlossen, anhand dessen dann in einfacher Weise die Kompression bewertet werden kann.

Unter einem Brennraumdruckwert wird im Kontext der vorliegenden technischen Lehre ein Wert verstanden, welcher mit einem physikalischen Druck in dem Brennraum, das heißt dem Brennraumdruck, zusammenhängt. Der mindestens eine Brennraumdruckwert kann insbesondere selbst der physikalische Brennraumdruck oder Brennraumdruckverlauf sein, oder der Brennraumdruck kann aus dem Brennraumdruckwert ableitbar sein, oder umgekehrt kann der Brennraumdruckwert aus dem Brennraumdruck ableitbar sein. Beispielsweise kann der mindestens eine Brennraumdruckwert auch ein Kompressionsverhältnis oder ein Brennraumdruckgradient sein.

Gemäß einer Weiterbildung der Erfindung ist vorgesehen, dass als der mindestens eine Brennraumdruckwert ein zeitabhängiger Brennraumdruckverlauf ermittelt wird. Dies erlaubt vorteilhaft eine besonders genaue Bewertung der Kompression auf der Grundlage einer zeitabhängig ermittelten Verlaufskurve, die somit einen hohen Informationsgehalt und eine hohe Aussagekraft hat.

Der Begriff "zeitabhängig" schließt hier auch eine implizite Zeitabhängigkeit ein, beispielsweise in Form einer Abhängigkeit vom Kurbelwellenwinkel. Insbesondere werden die Begriffe "zeitabhängig" und "kurbelwinkelabhängig" zumindest für die Zwecke des hier vorliegenden Verfahrens als synonym angesehen. Insbesondere wird der zeitabhängige Brennraumdruckverlauf bevorzugt als kurbelwinkelabhängiger Druckverlauf ermittelt.

Alternativ oder zusätzlich wird als der mindestens eine Brennraumdruckwert ein Maximum des zeitabhängigen Brennraumdruckverlaufs ermittelt. Dies stellt eine vergleichsweise einfache und trotzdem sehr zuverlässige Möglichkeit dar, die Kompression zu bewerten, da aus dem zeitabhängig ermittelten Brennraumdruckverlauf der letztlich für die Bewertung der Kompression relevanteste Wert, nämlich das Druckmaximum - oder anders formuliert der erreichte Maximaldruck - ermittelt und herangezogen werden kann.

Beispielsweise kann - bei in dem Brennraum stattfindender Verbrennung - ein Maximaldruck von 200 bar auf eine ordnungsgemäße Kompression hindeuten, während ein Maximaldruck von 160 bar auf eine reduzierte Kompression, insbesondere auf einen Kompressionsverlust, hindeuten kann. Konkrete Werte sind allerdings stets abhängig von der konkreten Brennkraftmaschine.

Gemäß einer Weiterbildung der Erfindung ist vorgesehen, dass der mindestens eine Brennraumdruckwert mit mindestens einem Referenzdruckwert verglichen wird, wobei dadurch die Kompression in dem Brennraum bewertet wird. Vorteilhaft kann insbesondere auf diese Weise eine zuverlässige und genaue Bewertung der Kompression oder eine geeignete Einleitung wenigstens einer Maßnahme erfolgen. Der Referenzdruckwert entspricht insbesondere in seiner Dimension dem Brennraumdruckwert; ist beispielsweise der Brennraumdruckwert ein physikalischer Druck, ist auch der Referenzdruckwert ein physikalischer Druck, ist der Brennraumdruckwert ein Kompressionsverhältnis, ist auch der Referenzdruckwert ein Kompressionsverhältnis, und ist der Brennraumdruckwert ein Druckgradient, ist auch Referenzdruckwert ein Druckgradient.

In anderen Worten wird die Bewertung der Kompression durchgeführt, indem der mindestens eine Brennraumdruckwert mit dem mindestens ein Referenzdruckwert verglichen wird. Alternativ oder zusätzlich wird die Bewertung anhand des Vergleichs des mindestens einen Brennraumdruckwerts mit dem mindestens einen Referenzdruckwert vorgenommen. Insbesondere wird in einer Ausführungsform die Kompression als in Ordnung bewertet, wenn der Vergleich ergibt, dass der mindestens eine Brennraumdruckwert höchstens innerhalb eines vorbestimmten Toleranzbereichs von dem Referenzdruckwert abweicht - oder anders formuliert eine Abweichung zwischen dem Referenzdruckwert und dem Brennraumdruckwert einen ersten Schwellenwert nicht überschreitet. Die Kompression wird als nicht in Ordnung bewertet, wenn der Vergleich ergibt, dass der mindestens eine Brennraumdruckwert um mehr als den vorbestimmten Toleranzbereich von dem Referenzdruckwert abweicht - oder anders formuliert die Abweichung zwischen dem Referenzdruckwert und dem Brennraumdruckwert den ersten Schwellenwert überschreitet. Insbesondere wird die Kompression als nicht in Ordnung bewertet, wenn der Vergleich ergibt, dass der mindestens eine Brennraumdruckwert um mehr als der vorbestimmte Toleranzbereich kleiner ist als der Referenzdruckwert.

In einer Ausgestaltung wird ein Druckmaximum, das heißt ein maximaler Brennraumdruckwert, als der mindestens eine Brennraumdruckwert mit dem mindestens einen Referenzdruckwert verglichen und dadurch die Kompression in dem Brennraum bewertet.

Als der mindestens eine Referenzdruckwert kann auch ein zeitabhängiger - oder gleichbedeutend kurbelwinkelabhängiger - Referenzdruckverlauf verwendet werden, insbesondere wenn der Brennraumdruckwert ein Brennraumdruckverlauf ist.

Als der mindestens eine Referenzdruckwert wird in einer Ausführungsform ein anhand von Prüfstandsversuchen gewonnener Referenzdruckwert verwendet. Alternativ wird als der mindestens eine Referenzdruckwert ein historischer Brennraumdruckwert verwendet, der an dem Brennraum zu einer Zeit ermittelt wurde, als die Kompression in Ordnung war, beispielsweise im Neuzustand der Brennkraftmaschine, beispielsweise als über eine vorbestimmte Anzahl von Betriebsstunden ermittelter Mittelwert des Brennraumdrucks oder des Brennraumdruckverlaufs. Weiter alternativ wird als der mindestens eine Referenzdruckwert ein zeitlicher Mittelwert über den Brennraumdruck eines anderen, von dem momentan betrachteten oder geprüften Brennraum verschiedenen Brennraums derselben Brennkraftmaschine verwendet, oder ein Mittelwert über den Brennraumdruck einer Mehrzahl anderer, von dem momentan betrachteten oder geprüften Brennraum verschiedener Brennräume derselben Brennkraftmaschine, der zusätzlich zu der Mittelung über die Brennräume vorzugsweise auch zeitlich gemittelt ist, beispielsweise über eine vorbestimmte Anzahl an Arbeitsspielen oder Betriebsstunden. Weiter alternativ kann der mindestens eine Referenzdruckwert auch durch einen Nutzer parametriert, das heißt insbesondere vorgegeben werden.

Der Vergleich zwischen dem mindestens einen Brennraumdruckwert und dem mindestens einen Referenzdruckwert kann durch einfache Subtraktion, oder - im Fall von zeitabhängigen Druckverläufen - durch Integration oder Korrelation, insbesondere Kreuzkorrelation, durchgeführt werden.

Gemäß einer Weiterbildung der Erfindung ist vorgesehen, dass der mindestens eine Brennraumdruckwert aus dem Sensorsignal mittels einer Transferfunktion ermittelt wird. Dies stellt eine besonders zuverlässige Ausgestaltung des Verfahrens dar.

In einer Ausführungsform wird als die Transferfunktion eine heuristische Transferfunktion, eine physikalische Transferfunktion oder ein künstliches neuronales Netz verwendet.

Unter einer heuristischen Transferfunktion wird dabei eine Funktion verstanden, die zumindest keine unmittelbare physikalische Bedeutung oder keine physikalische Bedeutung hat, die es aber erlaubt, aus dem Sensorsignal den mindestens einen Brennraumdruckwert abzuleiten, zu ermitteln oder zu berechnen. Die heuristische Transferfunktion kann beispielsweise durch Regressionsanalyse an zuvor erfassten Datensätzen gewonnen werden, wobei die Datensätze einerseits Sensorsignale und andererseits anderweitig gemessene, den Sensorsignalen zugeordnete Brennraumdruckwerte umfassen. Diese Brennraumdruckwerte können beispielsweise an einem Prüfstand mittels eines Brennraumdrucksensors gewonnen sein, wobei der Prüfstand zugleich auch den Motorsensor aufweist, sodass es möglich ist, die Brennraumdruckwerte den am gleichen Prüfstand gewonnenen Sensorsignalen zuzuordnen.

Eine physikalische Transferfunktion stellt demgegenüber einen physikalischen Zusammenhang zwischen dem Sensorsignal und dem mindestens einen Brennraumdruckwert her.

In einer Ausführungsform wird ein Klopfsensor oder Beschleunigungssensor als Motorsensor verwendet, der vorzugsweise in oder an einem Zylinderkopf angeordnet ist, und als physikalisches Modell wird ein Masse-Feder-Dämpfer-System angenommen, wobei die Modellierung gemäß folgender Gleichung erfolgt: $m {x}^{¨} + d \dot{x} + cx = F ,$ (1) wobei *m* die Masse des Systems, *d* die Dämpfungskonstante, *c* die Federkonstante und *F* die auf das System einwirkende Kraft ist. Der Beschleunigungssterm, das heißt die zweite Ableitung der Auslenkung *x*, ergibt sich direkt aus dem Sensorsignal oder als das Sensorsignal. Die erste Ableitung der Auslenkung x und die Auslenkung x selbst können durch einfache und zweifache Integration der Beschleunigung nach der Zeit gewonnen werden.

Um einen Zusammenhang mit dem Brennraumdruck zu erhalten, wird Gleichung (1) durch eine beliebige Fläche dividiert, wodurch die folgende Gleichung mit veränderten Modellkonstanten *m'*, *d'*, *c*' und dem Brennraumdruck *p_{B}* erhalten wird: $m ′ {x}^{¨} + d ′ \dot{x} + c ′ x = {p}_{B} .$ (2)

Bevorzugt wird ein weiterer Term eingeführt, der es erlaubt, die absolute Skala und/oder die Lage des Brennraumdrucks anzupassen, wobei der weitere Term eine zusätzliche Konstante *k* und einen mittleren Einlassdruck *p̅_̅{̅L̅}̅* im Luftpfad umfasst, der beispielsweise mittels eines Ladedrucksensors erhalten werden kann: $m ′ {x}^{¨} + d ′ \dot{x} + c ′ x + k \overline{{p}_{L}} = {p}_{B} .$ (3)

Vorzugsweise wird Gleichung (2) oder Gleichung (3) unter Variation der Konstanten *m'*, *d'*, *c'* und gegebenenfalls *k* an Datensätze angepasst, die am Prüfstand oder Vollmotor gewonnen wurden, um die Werte der Konstanten zu ermitteln. Danach können die Gleichungen verwendet werden, um im Betrieb der Brennkraftmaschine aus dem Sensorsignal den mindestens einen Brennraumdruckwert zu ermitteln.

Eine solche Vorgehensweise zur Ermittlung von Brennraumdruckwert aus dem Sensorsignal eines entsprechenden Motorsensors ist insbesondere offenbart in Posch, S., Pirker, G., Kefalas, A., and Wimmer, A., "Development of a Virtual Sensor to Predict Cylinder Pressure Signal Based on a Knock Sensor Signal, " SAE Technical Paper 2022-01-0627, 2022, doi:10.4271/2022-01-0627*.* Weitere derartige Verfahren sind auch offenbart in Kefalas, A., Ofner, A., Posch, S., Pirker, G. et al., "A Comparison of Virtual Sensors for Combustion Parameter Prediction of Gas Engines Based on Knock Sensor Signals, " SAE Technical Paper 2023-01-0434, 2023, doi:10.4271/2023-01-0434*.*

Mit geeignet gewonnenen Prüfstandssdaten, insbesondere Datensätzen, die einerseits Sensorsignale des Motorsensors und andererseits den Sensorsignalen zugeordnete Brennraumdruckwerte umfassen, ist es auch möglich, ein künstliches neuronales Netzwerk darauf zu trainieren, aus den Sensorsignalen Brennraumdruckwerte zu ermitteln, wobei das derart trainierte künstliche neuronale Netzwerk dann im Betrieb der Brennkraftmaschine verwendet werden kann, um aus dem Sensorsignal den mindestens einen Brennraumdruckwert zu ermitteln.

Gemäß einer Weiterbildung der Erfindung ist vorgesehen, dass abhängig von der Bewertung der Kompression keine Maßnahme oder mindestens eine Maßnahme eingeleitet wird.

Insbesondere wird bevorzugt keine Maßnahme eingeleitet, wenn die Kompression als in Ordnung bewertet wird, wobei eine Maßnahme eingeleitet wird, wenn die Kompression als nicht in Ordnung bewertet wird. Die Maßnahme kann dabei beispielsweise umfassen, dass eine Motorlast der Brennkraftmaschine reduziert, eine Einspritzung oder Zündung angepasst, eine Meldung oder Warnung ausgegeben oder die Brennkraftmaschine abgeschaltet wird. Alternativ oder zusätzlich kann als keine Maßnahme die Brennkraftmaschine - insbesondere ohne Eingriff durch das hier beschriebene Verfahren - weiter betrieben werden.

Unter der Reduktion der Motorlast wird bevorzugt verstanden, dass zumindest eine Größe, ausgewählt aus einer Drehzahl, einem Drehmoment und einer Leistung der Brennkraftmaschine, reduziert wird. Es können auch mindestens zwei dieser Größen reduziert werden. Schließlich können auch alle drei Größen reduziert werden.

In einer Ausführungsform werden abhängig von der Bewertung der Kompression keine Maßnahme oder zwei verschiedene Maßnahmen eingeleitet. Insbesondere wird die Bewertung derart durchgeführt, dass die Kompression in drei Klassen klassifiziert wird, wobei in der ersten Klasse keine Maßnahme, in der zweiten Klasse eine erste Maßnahme und in der dritten Klasse eine zweite Maßnahme eingeleitet wird. Beispielsweise wird keine Maßnahme eingeleitet, wenn die Kompression als in Ordnung bewertet wird, insbesondere wenn der Vergleich ergibt, dass der mindestens eine Brennraumdruckwert höchstens innerhalb eines vorbestimmten Toleranzbereichs von dem Referenzdruckwert abweicht. Eine erste Maßnahme wird eingeleitet, wenn die Kompression auf eine erste, minderschwere Weise als nicht in Ordnung bewertet wird, beispielsweise wenn der Vergleich ergibt, dass der mindestens eine Brennraumdruckwert um mehr als den vorbestimmten Toleranzbereich von dem Referenzdruckwert abweicht, wobei die Abweichung jedoch einen vorbestimmten - zweiten - Schwellenwert nicht überschreitet. Eine zweite Maßnahme wird eingeleitet, wenn die Kompression auf eine zweite, schwerere Weise als nicht in Ordnung bewertet wird, beispielsweise wenn der Vergleich ergibt, dass der mindestens eine Brennraumdruckwert um mehr als den vorbestimmten Toleranzbereich von dem Referenzdruckwert abweicht, wobei die Abweichung größer ist als der vorbestimmte - zweite - Schwellenwert.

In einer Ausgestaltung wird abhängig von der Bewertung der Kompression die Brennkraftmaschine - insbesondere ohne Eingriff durch das hier beschriebene Verfahren - weiter betrieben, eine Motorlast der Brennkraftmaschine reduziert, eine Einspritzung oder Zündung angepasst, eine Meldung oder Warnung ausgegeben, oder die Brennkraftmaschine wird abgeschaltet.

Insbesondere kann die erste Maßnahme sein, dass die Motorlast der Brennkraftmaschine reduziert, eine Einspritzung oder Zündung angepasst oder eine Meldung oder Warnung ausgegeben wird. Alternativ oder zusätzlich kann die zweite Maßnahme sein, dass die Brennkraftmaschine abgeschaltet wird. Alternativ oder zusätzlich kann als keine Maßnahme die Brennkraftmaschine - insbesondere ohne Eingriff durch das hier beschriebene Verfahren - weiter betrieben werden.

Gemäß einer Weiterbildung der Erfindung ist vorgesehen, dass in einem Prüfmodus eine Verbrennung in dem Brennraum vermieden wird, wobei das Sensorsignal in dem Prüfmodus erfasst wird. Dies stellt eine besonders einfache Ausgestaltung des Verfahrens dar, da das Sensorsignal dann ausschließlich die Kompression und nicht auch eine Verbrennung reflektiert. Da der Kompressionsdruck - insbesondere abhängig von einem Ladedruck - im Maximum bis zu 50 bar oder bis zu 100 bar betragen kann, ist eine entsprechende Signatur ohne weiteres in dem Sensorsignal zu finden, auch ohne den zusätzlichen Verbrennungsdruck. Durch den Kompressionsdruck entsteht insbesondere eine durch den Motorsensor messbare Beschleunigung.

Darunter, dass die Verbrennung in dem Brennraum vermieden wird, wird bevorzugt verstanden, dass die Verbrennung abgeschaltet wird, das heißt insbesondere, dass eine die Verbrennung initiierende Entflammungsvorrichtung wie beispielsweise eine Zündkerze oder ein Brennstoffinjektor abgeschaltet oder deaktiviert wird.

Alternativ oder zusätzlich wird das Sensorsignal in einem Kurbelwinkelbereich von 180 °KW vor ZOT (ZOT: Zünd-OT, das heißt oberer Totpunkt zwischen dem Kompressions- und dem Arbeitstakt) bis 180 °KW nach ZOT, vorzugsweise 120 °KW vor ZOT bis 120 °KW nach ZOT, vorzugsweise 90 °KW vor ZOT bis 90 °KW nach ZOT erfasst oder ausgewertet.

Insbesondere umfassen diese Winkelbereiche die relevante Kompression in dem Brennraum. Soweit eine Verbrennung in dem Brennraum stattfindet, kann die Kompression gleichwohl durch Vergleich mit dem - ebenfalls bei stattfindender Verbrennung ermittelten - Referenzdruckwert ermittelt werden, da der Brennraumdruckwert im Vergleich mit dem Referenzdruckwert auch dann, wenn eine Verbrennung in dem Brennraum stattfindet, bei Kompressionsverlust messbar abnimmt.

Alternativ oder zusätzlich wird das Sensorsignal in einem Kurbelwinkelbereich von 180 °KW vor ZOT bis zu einem Entflammungswinkel, vorzugsweise 120 °KW vor ZOT bis zu dem Entflammungswinkel, vorzugsweise 90 °KW vor ZOT bis zu dem Entflammungswinkel, erfasst oder ausgewertet. Vorteilhaft wird hierbei die reine Kompression ohne die nachfolgende Verbrennung berücksichtigt.

Unter einem Entflammungswinkel wird im Kontext der vorliegenden technischen Lehre insbesondere ein Kurbelwellenwinkel oder - gleichbedeutend - ein Zeitpunkt verstanden, bei oder zu dem die Entflammung beginnt. Insbesondere ist der Entflammungswinkel ein Zünd- oder Einspritzzeitpunkt.

Alternativ oder zusätzlich wird die Kompression während des Betriebs der Brennkraftmaschine dauerhaft bewertet. Insbesondere kann das Verfahren dauerhaft während des Betriebs der Brennkraftmaschine durchgeführt werden. Insbesondere auf diese Weise kann vorteilhaft frühzeitig ein Verschleiß von Kolbenringen des Brennraums festgestellt werden.

Alternativ oder zusätzlich wird die Kompression während des Betriebs der Brennkraftmaschine in vorbestimmten - insbesondere regelmäßigen - Abständen, vorzugsweise periodisch, bewertet.

Alternativ oder zusätzlich wird die Kompression während des Betriebs der Brennkraftmaschine auf ein Auslösesignal hin bewertet. In einer Ausführungsform wird das Auslösesignal automatisch bedarfsweise, das heißt unter vorbestimmten Umständen, beispielsweise bei einem anderweitig unvorhergesehenen oder unerklärbaren Leistungseinbruch der Brennkraftmaschine, oder nach einem Betrieb der Brennkraftmaschine unter hoher Luftfeuchtigkeit, oder nach einem vermuteten Schadensereignis, generiert. Alternativ oder zusätzlich kann das Auslösesignal durch eine Nutzeranforderung, insbesondere durch einen Betreiber der Brennkraftmaschine, erzeugt werden, um die Bewertung der Kompression auszulösen.

Gemäß einer Weiterbildung der Erfindung ist vorgesehen, dass die Brennkraftmaschine eine Mehrzahl an Brennräumen aufweist, wobei die Kompression in der Mehrzahl an Brennräumen anhand des Sensorsignals des Motorsensors bewertet wird. Vorteilhaft kann somit die Kompression für die Mehrzahl der Brennräume bewertet werden. Bevorzugt wird die Kompression anhand des Sensorsignals für jeden Brennraum bewertet. Optional weist die Brennkraftmaschine - zusätzlich zu der Mehrzahl an Brennräumen - eine Mehrzahl an Motorsensoren auf, wobei jedem Brennraum der Mehrzahl an Brennräumen ein Motorsensor der Mehrzahl an Motorsensoren zugewiesen und die Kompression in der Mehrzahl an Brennräumen anhand des Sensorsignals des jeweiligen Motorsensors bewertet wird.

Es ist insbesondere möglich, dass jedem Brennraum eine separater Motorsensor zugeordnet ist. Dies bedeutet insbesondere, dass die Brennkraftmaschine so viele Motorsensoren aufweist, wie sie Brennräume aufweist.

Alternativ ist es möglich, dass die Brennkraftmaschine weniger Motorsensoren als Brennräume aufweist, wobei Zuordnung des Sensorsignals oder der Sensorsignale zu den Brennräumen aufgrund von mindestens einem Zuordnungskriterium erfolgt, beispielsweise anhand vorbestimmter Zeitpunkte oder Kurbelwinkelfenster. Somit ist es vorteilhaft möglich, ein Sensorsignal eines Motorsensors brennraumspezifisch für eine Mehrzahl an Brennräumen auszuwerten. Insbesondere bei kleineren Brennkraftmaschine mit nicht zu vielen Brennräumen, insbesondere bis zu zwölf Brennräumen, kann gegebenenfalls sogar ein einziger Motorsensor genügen, um die Kompression in allen Brennräumen brennraumspezifisch bewerten zu können.

Die Aufgabe wird in einem zweiten Aspekt auch gelöst, indem eine Steuervorrichtung für eine Brennkraftmaschine geschaffen wird, die eingerichtet ist zur Durchführung eines erfindungsgemäßen Verfahrens oder eines Verfahrens nach einer oder mehreren der zuvor beschriebenen Ausführungsformen. In Zusammenhang mit der Steuervorrichtung ergeben sich insbesondere diejenigen Vorteile, die zuvor bereits in Zusammenhang mit dem Verfahren erläutert wurden.

Die Aufgabe wird in einem dritten Aspekt auch gelöst, indem eine Brennkraftmaschine geschaffen wird, die mindestens einen Brennraum aufweist, in dem ein Kolben von der Maximalvolumen-Position in die Minimalvolumen-Position verlagerbar angeordnet ist, um die Kompression eines Gasgemischs in dem Brennraum zu bewirken, wobei die Brennkraftmaschine mindestens einen Motorsensor aufweist, der angeordnet und eingerichtet ist zur Erfassung von - insbesondere hochfrequenten - Vibrationen des Brennraums, und wobei die Brennkraftmaschine außerdem eine Steuervorrichtung aufweist, die mit dem mindestens einen Motorsensor wirkverbunden und eingerichtet ist, um ein Sensorsignal des Motorsensors zu empfangen, wobei die Steuervorrichtung eingerichtet ist, um die Kompression in dem mindestens einen Brennraum anhand des Sensorsignals des Motorsensors zu bewerten. In Zusammenhang mit der Brennkraftmaschine ergeben sich insbesondere diejenigen Vorteile, die zuvor bereits in Zusammenhang mit dem Verfahren oder der Steuervorrichtung erläutert wurden.

In einer Ausführungsform weist die Brennkraftmaschine eine erfindungsgemäße Steuervorrichtung oder eine Steuervorrichtung nach einer oder mehreren der zuvor beschriebenen Ausführungsformen auf.

Der mindestens eine Motorsensor ist vorzugsweise ausgewählt aus der Gruppe, bestehend aus einem Klopfsensor, einem Körperschallsensor, einem Motor-Geräuschsensor, einem piezoelektrischen Sensor, einem Mikrophon, einem Ultraschallsensor, einem Beschleunigungssensor, einem Vibrationssensor, und einer Kombination aus wenigstens zwei der genannten Sensoren.

In einer Ausführungsform ist vorgesehen, dass die Brennkraftmaschine keinen Drucksensor aufweist. Insbesondere ist dem mindestens einen Brennraum der Brennkraftmaschine kein Drucksensor zugeordnet. Vorzugsweise ist keinem der Brennräume der Brennkraftmaschine ein Drucksensor zugeordnet. Insbesondere ist der Motorsensor kein Brennraumdrucksensor.

Die Brennkraftmaschine weist bevorzugt eine Mehrzahl an Brennräumen auf, wobei die Kompression in der Mehrzahl an Brennräumen anhand des Sensorsignals des Motorsensors bewertet wird. Dabei ist es möglich, dass jedem Brennraum eine separater Motorsensor zugeordnet ist. Dies bedeutet insbesondere, dass die Brennkraftmaschine so viele Motorsensoren aufweist, wie sie Brennräume aufweist. Alternativ ist es möglich, dass die Brennkraftmaschine weniger Motorsensoren als Brennräume, insbesondere auch nur einen Motorsensor, aufweist.

Die Erfindung wird im Folgenden anhand der Zeichnung näher erläutert. Dabei zeigen:
- Figur 1: ein Ausführungsbeispiel einer Brennkraftmaschine und ein Ausführungsbeispiel einer Steuervorrichtung;
- Figur 2: ein Ausführungsbeispiel eines Verfahrens zur Bewertung einer Kompression in einem Brennraum der Brennkraftmaschine, und
- Figur 3: eine Detaildarstellung des Ausführungsbeispiels des Verfahrens gemäß Figur 2, und
- Figur 4: Prinzipdarstellungen zur Erläuterung des Verfahrens.

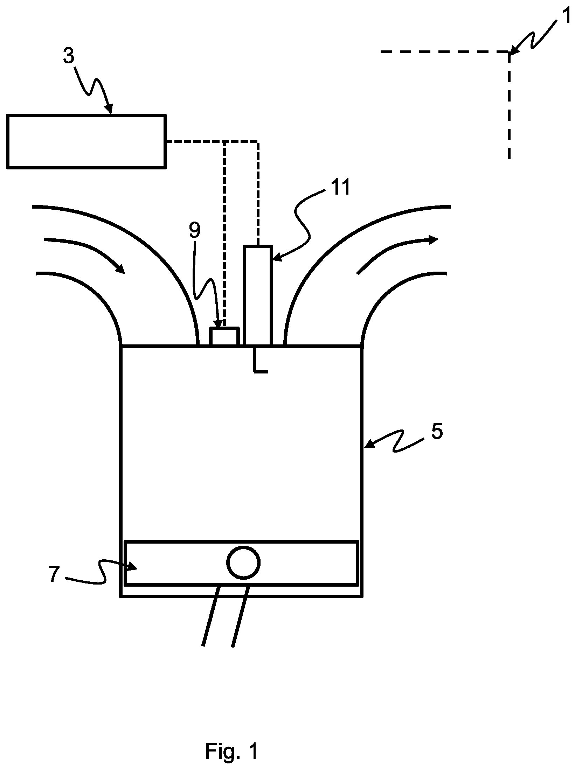

**Fig. 1** zeigt ein Ausführungsbeispiel einer Brennkraftmaschine 1 und ein Ausführungsbeispiel einer Steuervorrichtung 3.

Die Brennkraftmaschine 1 weist mindestens einen Brennraum 5 auf, in dem ein Kolben 7 von einer Maximalvolumen-Position (unterer Totpunkt) in eine Minimalvolumen-Position (oberer Totpunkt) verlagerbar angeordnet ist, um die Kompression eines Gasgemischs in dem Brennraum 5 zu bewirken. Die Brennkraftmaschine 1 weist außerdem mindestens einen Motorsensor 9 auf, der angeordnet und eingerichtet ist zur Erfassung von - insbesondere hochfrequenten - Vibrationen des Brennraums 5. Die Brennkraftmaschine 1 weist auch die Steuervorrichtung 3 auf, die mit dem mindestens einen Motorsensor 9 wirkverbunden und eingerichtet ist, um ein Sensorsignal des Motorsensors 9 zu empfangen, wobei die Steuervorrichtung 3 weiter eingerichtet ist, um die Kompression in dem mindestens einen Brennraum 5 anhand des Sensorsignals des Motorsensors 9 zu bewerten.

Der mindestens eine Motorsensor 9 ist vorzugsweise ausgewählt aus der Gruppe, bestehend aus einem Klopfsensor, einem Körperschallsensor, einem Motor-Geräuschsensor, einem piezoelektrischen Sensor, einem Mikrophon, einem Ultraschallsensor, einem Beschleunigungssensor, einem Vibrationssensor, und einer Kombination aus wenigstens zwei der genannten Sensoren. Insbesondere ist der Motorsensor 9 kein Brennraumdrucksensor.

Der mindestens eine Motorsensor 9 ist bevorzugt eingerichtet zur Erfassung von hochfrequenten Vibrationen, insbesondere in einem Bereich von 1 Hz bis 20 kHz, vorzugsweise von 2 Hz bis 18 kHz, vorzugsweise von 3 Hz bis 15 kHz, vorzugsweise von 4 Hz bis 12 kHz, vorzugsweise von 5 Hz bis 10 kHz, insbesondere von 10 Hz bis 5 kHz, vorzugweise von 100 Hz bis 5 kHz.

Die Brennkraftmaschine 1 weist bevorzugt eine Mehrzahl an Brennräumen 5 auf, wobei die Kompression in der Mehrzahl an Brennräumen 5 anhand des Sensorsignals des mindesten einen Motorsensors 9 bewertet wird. Dabei ist es möglich, dass jedem Brennraum 5 eine separater Motorsensor 9 zugeordnet ist. Dies bedeutet insbesondere, dass die Brennkraftmaschine 1 so viele Motorsensoren 9 aufweist, wie sie Brennräume 5 aufweist. Alternativ ist es möglich, dass die Brennkraftmaschine 1 weniger Motorsensoren 9 als Brennräume 5, insbesondere auch nur einen einzigen Motorsensor 9, aufweist.

Die Brennkraftmaschine 1 weist außerdem eine Entflammungsvorrichtung 11 auf, die eingerichtet ist zur Entflammung eines Brennstoff-Luft-Gemischs in dem Brennraum 5. Die Steuervorrichtung 3 ist mit der Entflammungsvorrichtung 11 zu deren Ansteuerung wirkverbunden. Die Entflammungsvorrichtung 11 ist bevorzugt als Zündkerze oder als Brennstoffinjektor ausgebildet.

Die Brennkraftmaschine 1 ist hier als Hubkolbenmotor ausgebildet. Sie kann aber beispielsweise auch als Rotationskolbenmotor, Kreiskolbenmotor oder Wankelmotor ausgebildet sein.

Die Steuervorrichtung 3 ist bevorzugt eingerichtet zur Durchführung eines im Folgenden näher beschriebenen Verfahrens.

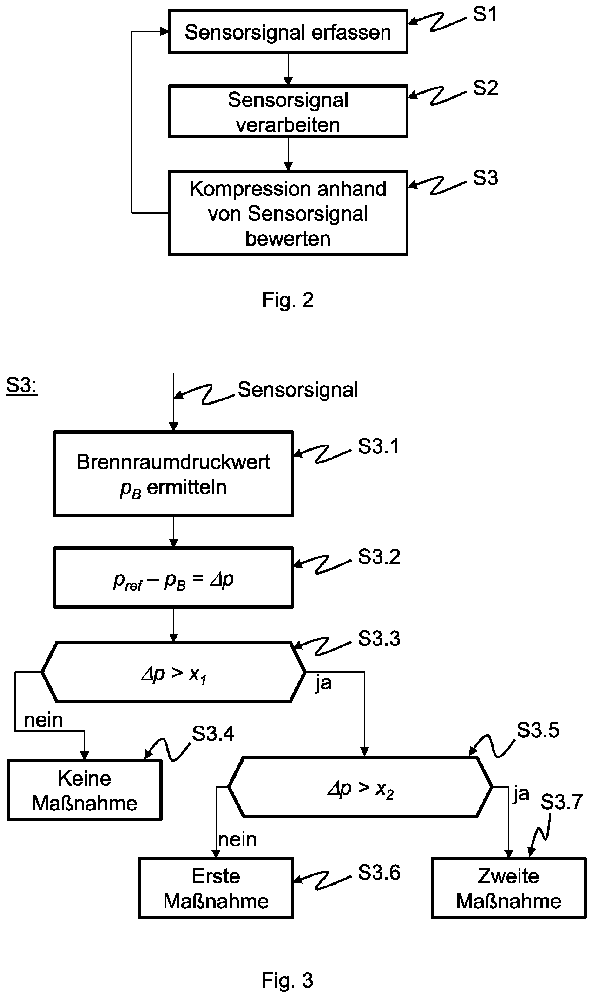

**Fig. 2** zeigt ein Ausführungsbeispiel eines Verfahrens zur Bewertung einer Kompression in einem Brennraum der Brennkraftmaschine.

Gleiche und funktionsgleiche Elemente sind in allen Figuren mit gleichen Bezugszeichen versehen, sodass insofern jeweils auf die vorangegangene Beschreibung verwiesen wird. Außerdem sind in einer Figur mehrfach auftretende Elemente der besseren Übersichtlichkeit wegen jeweils nur einmal mit einem Bezugszeichen versehen.

In einem ersten Schritt S1 wird mittels des Motorsensors 9 das Sensorsignal erfasst.

In einem optionalen zweiten Schritt S2 wird das Sensorsignal verarbeitet, insbesondere gefiltert, vorzugsweise mittels eines Tiefpassfilters und/oder mittels eines Hochpassfilters, geglättet, renormiert und/oder beschnitten.

In einem dritten Schritt S3 wird die Kompression in dem Brennraum 5 anhand des Sensorsignals bewertet.

Vorzugsweise wird das Sensorsignal in dem ersten Schritt S1 in einem Kompressionstakt erfasst; zusätzlich wird das Sensorsignal bevorzugt - im Zeit- oder Kurbelwellenwinkelbereich - in dem optionalen zweiten Schritt S2 oder in dem dritten Schritt S3 in einem Auswertungsfenster ausgewertet, wobei das Auswertungsfenster den Kompressionstakt umfasst oder zumindest bereichsweise in dem Kompressionstakt liegt.

In einer Ausgestaltung wird das Sensorsignal in einem Prüfmodus erfasst, in dem eine Verbrennung in dem Brennraum 5 vermieden oder abgeschaltet wird, wobei insbesondere die Entflammungsvorrichtung 11 nicht zur Initiierung eine Entflammung in dem Brennraum 5 angesteuert wird. Alternativ oder zusätzlich wird das Sensorsignal in einem Kurbelwinkelbereich von 180 °KW vor ZOT bis 180 °KW nach ZOT, vorzugsweise 120 °KW vor ZOT bis 120 °KW nach ZOT, vorzugsweise 90 °KW vor ZOT bis 90 °KW nach ZOT erfasst oder ausgewertet. Alternativ oder zusätzlich wird das Sensorsignal in einem Kurbelwinkelbereich von 180 °KW vor ZOT bis zu einem Entflammungswinkel, vorzugsweise 120 °KW vor ZOT bis zu dem Entflammungswinkel, vorzugsweise 90 °KW vor ZOT bis zu dem Entflammungswinkel, erfasst oder ausgewertet.

Bevorzugt wird die Kompression während des Betriebs der Brennkraftmaschine 1 dauerhaft bewertet. Insbesondere kann das Verfahren dauerhaft während des Betriebs der Brennkraftmaschine 1 durchgeführt werden. In diesem Fall schließt sich an den dritten Schritt S3 unmittelbar wieder der erste Schritt S1 an, wie hier schematisch durch einen entsprechenden Pfeil dargestellt.

Alternativ oder zusätzlich wird die Kompression während des Betriebs der Brennkraftmaschine 1 in vorbestimmten - insbesondere regelmäßigen - Abständen, vorzugsweise periodisch, bewertet.

Alternativ oder zusätzlich wird die Kompression während des Betriebs der Brennkraftmaschine 1 auf ein Auslösesignal hin bewertet. Das Auslösesignal kann bedarfsweise automatisch, das heißt unter vorbestimmten Umständen, beispielsweise bei einem anderweitig unvorhergesehenen oder unerklärbaren Leistungseinbruch der Brennkraftmaschine 1, oder nach einem Betrieb der Brennkraftmaschine 1 unter hoher Luftfeuchtigkeit, oder nach einem vermuteten Schadensereignis, generiert werden. Alternativ oder zusätzlich kann das Auslösesignal durch eine Nutzeranforderung, insbesondere durch einen Betreiber der Brennkraftmaschine 1, erzeugt werden, um die Bewertung der Kompression auszulösen.

**Fig. 3** zeigt eine Detaildarstellung des Ausführungsbeispiels des Verfahrens gemäß Figur 2. Dabei zeigt Figur 3 insbesondere eine Detaildarstellung des dritten Schritts S3.

In einem ersten Teilschritt S3.1 wird anhand des Sensorsignals mindestens ein Brennraumdruckwert *p_{B}* ermittelt. Als der mindestens eine Brennraumdruckwert *p_{B}* kann insbesondere ein zeitabhängiger Brennraumdruckverlauf, oder ein Maximum des zeitabhängigen Brennraumdruckverlaufs, oder ein maximaler Brennraumdruck ermittelt werden.

Der mindestens eine Brennraumdruckwert *p_{B}* kann aus dem Sensorsignal insbesondere mittels einer Transferfunktion ermittelt werden, die als eine heuristische Transferfunktion, eine physikalische Transferfunktion oder ein künstliches neuronales Netz ausgestaltet sein kann. Dabei wird in bevorzugter Ausgestaltung ein Verfahren verwendet, wie es oben in Zusammenhang mit den Gleichungen (1) bis (3) beschrieben oder in Posch, S., Pirker, G., Kefalas, A., and Wimmer, A., "Development of a Virtual Sensor to Predict Cylinder Pressure Signal Based on a Knock Sensor Signal, " SAE Technical Paper 2022-01-0627, 2022, doi:10.4271/2022-01-0627 offenbart ist. Weitere geeignete Verfahren sind auch offenbart in Kefalas, A., Ofner, A., Posch, S., Pirker, G. et al., "A Comparison of Virtual Sensors for Combustion Parameter Prediction of Gas Engines Based on Knock Sensor Signals, " SAE Technical Paper 2023-01-0434, 2023, doi:10.4271/2023-01-0434*.*

In einem zweiten Teilschritt S3.2 wird der mindestens eine Brennraumdruckwert *p_{B}* mit mindestens einem Referenzdruckwert *p_{ref}* verglichen; bei dem konkret dargestellten Ausführungsbeispiel wird dazu eine Druckdifferenz *Δp* zwischen dem Referenzdruckwert *p_{ref}* und dem Brennraumdruckwert *p_{B}* gebildet.

In einem dritten Teilschritt S3.3 wird geprüft, ob die Druckdifferenz *Δp* einen ersten vorbestimmten Schwellenwert *x₁* überschreitet. Der erste Schwellenwert *x₁* definiert dabei insbesondere den vorbestimmten Toleranzbereich.

Ist dies nicht der Fall, wird in einem vierten Teilschritt S3.4 die Kompression zumindest implizit als in Ordnung bewertet und keine Maßnahme durchgeführt, das heißt die Brennkraftmaschine 1 wird insbesondere ohne Eingriff durch das hier beschriebene Verfahren weiter betrieben. Das Verfahren wird dann vorzugsweise in dem ersten Schritt S1 fortgesetzt.

Überschreitet dagegen die Druckdifferenz *Δp* den ersten vorbestimmten Schwellenwert *x₁,* wird in einem fünften Teilschritt S3.5 geprüft, ob die Druckdifferenz *Δp* zusätzlich einen zweiten vorbestimmten Schwellenwert *x₂* überschreitet.

Ist dies nicht der Fall, wird in einem sechsten Teilschritt S3.6 die Kompression zumindest implizit auf eine erste, minderschwere Weise als nicht in Ordnung bewertet, und es wird eine erste Maßnahme eingeleitet, die beispielsweise darin bestehen kann, dass eine Motorlast der Brennkraftmaschine 1 reduziert, eine Einspritzung oder Zündung angepasst, oder eine Meldung oder Warnung ausgegeben wird. Unter der Reduktion der Motorlast wird bevorzugt verstanden, dass zumindest eine Größe, ausgewählt aus einer Drehzahl, einem Drehmoment und einer Leistung der Brennkraftmaschine 1, reduziert wird. Es können auch mindestens zwei dieser Größen reduziert werden. Schließlich können auch alle drei Größen reduziert werden.

Überschreitet dagegen die Druckdifferenz *Δp* den zweiten vorbestimmten Schwellenwert *x₂,* wird in einem siebten Teilschritt S3.7 die Kompression zumindest implizit auf eine zweite, schwerere Weise als nicht in Ordnung bewertet, und es wird eine zweite Maßnahme eingeleitet. Die zweite Maßnahme kann insbesondere darin bestehen, dass die Brennkraftmaschine 1 abgeschaltet wird. Wird die Brennkraftmaschine nicht abgeschaltet, sondern eine andere zweite Maßnahme durchgeführt, beispielsweise eine stärkere Reduktion der Leistung als im Fall der ersten Maßnahme, wird das Verfahren anschließend vorzugsweise in dem ersten Schritt S1 fortgesetzt.

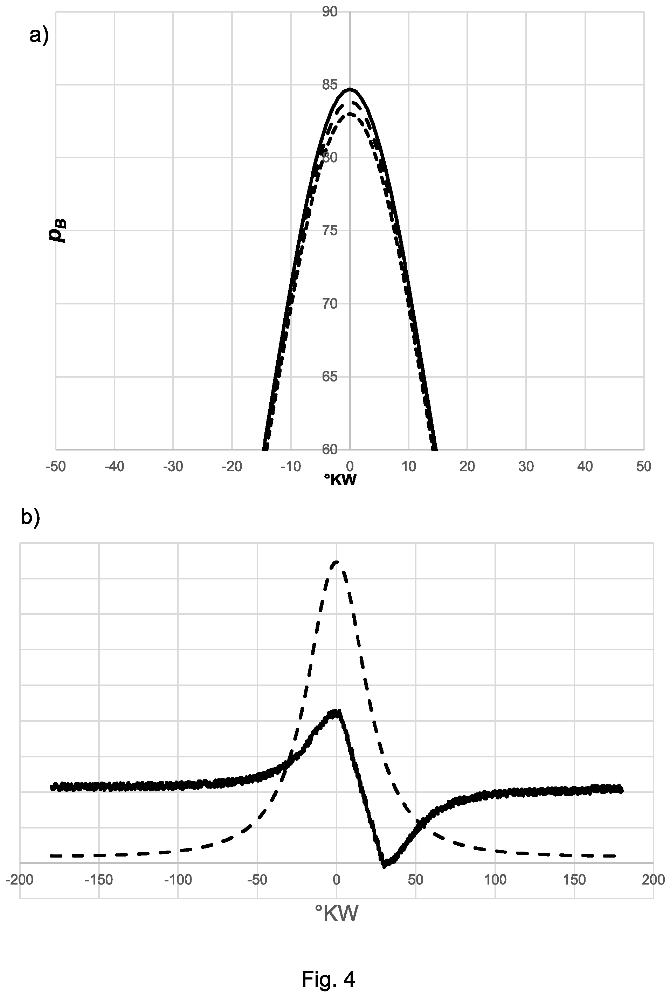

**Fig. 4** zeigt Prinzipdarstellungen zur Erläuterung des Verfahrens.

Bei a) ist ein erstes Diagramm dargestellt, bei dem der Brennraumdruckwert *p_{B},* hier als ein zeitlicher Brennraumdruckverlauf in bar - ohne Verbrennung -, gegen den Kurbelwellenwinkel in Grad Kurbelwinkel (°KW) abgetragen ist. Das Diagramm zeigt einen verschleißbedingten Kompressionsverlust, indem es als durchgezogene Kurve einen typischen Brennraumdruckverlauf nach 1000 Betriebsstunden, als grob strichlierte Kurve einen typischen Brennraumdruckverlauf nach 2500 Betriebsstunden, und als fein strichlierte Kurve einen typischen Brennraumdruckverlauf nach 4000 Betriebsstunden darstellt. Die Abnahme des maximalen Brennraumdrucks (Druckmaximum) ist dabei insbesondere auf den Verschleiß der Kolbenringe zurückzuführen.

Im Vergleich hierzu würde ein Wasserschlag beispielsweise abrupt zu einem deutlich stärkeren Kompressionsverlust und damit auch stärkeren Einbruch des Druckmaximums führen.

Bei b) ist ein zweites Diagramm dargestellt, welches einerseits das Sensorsignal als durchgezogene Kurve und andererseits den hieraus mittelbaren Brennraumdruckwert *p_{B}*, wiederum als zeitlichen Brennraumdruckverlauf, als strichlierte Kurve - beide in beliebigen Einheiten abgetragen über °KW - zeigt.

## Patentansprüche

1. Verfahren zum Betreiben einer Brennkraftmaschine (1), die mindestens einen Brennraum (5) aufweist, in dem ein Kolben (7) von einer Maximalvolumen-Position in eine Minimalvolumen-Position verlagerbar angeordnet ist, um eine Kompression eines Gasgemischs in dem Brennraum (5) zu bewirken, wobei
- mittels eines Motorsensors (9), der angeordnet und eingerichtet ist zur Erfassung von Vibrationen des Brennraums (5), ein Sensorsignal erfasst wird, und wobei
- eine Kompression in dem Brennraum (5) anhand des Sensorsignals bewertet wird.

2. Verfahren nach Anspruch 1, wobei als der Motorsensor (9) ein Sensor verwendet wird, der ausgewählt ist aus einer Gruppe, bestehend aus einem Klopfsensor, einem Körperschallsensor, einem Motor-Geräuschsensor, einem piezoelektrischen Sensor, einem Mikrophon, einem Ultraschallsensor, einem Beschleunigungssensor, einem Vibrationssensor, und einer Kombination aus wenigstens zwei der genannten Sensoren.

3. Verfahren nach einem der vorhergehenden Ansprüche, wobei anhand des Sensorsignals mindestens ein Brennraumdruckwert ermittelt und die Kompression in dem Brennraum (5) anhand des mindestens einen Brennraumdruckwerts bewertet wird.

4. Verfahren nach Anspruch 3, wobei als der mindestens eine Brennraumdruckwert ein zeitabhängiger Brennraumdruckverlauf und/oder ein Maximum des zeitabhängigen Brennraumdruckverlaufs ermittelt wird.

5. Verfahren nach einem der Ansprüche 3 oder 4, wobei der mindestens eine Brennraumdruckwert mit mindestens einem Referenzdruckwert verglichen und dadurch die Kompression in dem Brennraum (5) bewertet wird.

6. Verfahren nach einem der Ansprüche 3 bis 5, wobei der mindestens eine Brennraumdruckwert aus dem Sensorsignal mittels einer Transferfunktion ermittelt wird, wobei als die Transferfunktion optional eine heuristische Transferfunktion, eine physikalische Transferfunktion oder ein künstliches neuronales Netz verwendet wird.

7. Verfahren nach einem der vorhergehenden Ansprüche, wobei abhängig von der Bewertung der Kompression keine Maßnahme oder mindestens eine Maßnahme, insbesondere zwei verschiedene Maßnahmen, eingeleitet wird, wobei insbesondere eine Motorlast der Brennkraftmaschine (1) reduziert oder die Brennkraftmaschine (1) abgeschaltet wird.

8. Verfahren nach einem der vorhergehenden Ansprüche, wobei
- das Sensorsignal in einem Prüfmodus erfasst wird, in dem eine Verbrennung in dem Brennraum (5) vermieden wird, und/oder wobei
- das Sensorsignal in einem Kurbelwinkelbereich von 180 °KW vor ZOT bis 180 °KW nach ZOT, vorzugsweise 120 °KW vor ZOT bis 120 °KW nach ZOT, vorzugsweise 90 °KW vor ZOT bis 90 °KW nach ZOT, oder in einem Kurbelwinkelbereich von 180 °KW vor ZOT bis zu einem Entflammungswinkel, vorzugsweise 120 °KW vor ZOT bis zu dem Entflammungswinkel, vorzugsweise 90 °KW vor ZOT bis zu dem Entflammungswinkel, erfasst oder ausgewertet wird, und/oder wobei
- die Kompression während des Betriebs der Brennkraftmaschine (1)
∘ dauerhaft,
∘ in vorbestimmten Abständen, vorzugsweise periodisch, oder
∘ auf ein Auslösesignal hin
bewertet wird.

9. Verfahren nach einem der vorhergehenden Ansprüche, wobei die Brennkraftmaschine (1) eine Mehrzahl an Brennräumen (5) aufweist, wobei die Kompression in der Mehrzahl an Brennräumen (5) anhand des Sensorsignals des Motorsensors (9) bewertet wird, wobei vorzugsweise die Brennkraftmaschine (1) eine Mehrzahl an Motorsensoren (9) aufweist, wobei jedem Brennraum (5) ein Motorsensor (9) zugewiesen wird, und wobei die Kompression in der Mehrzahl an Brennräumen (5) anhand des Sensorsignals des jeweiligen Motorsensors (9) bewertet wird.

10. Steuervorrichtung für eine Brennkraftmaschine (1), eingerichtet zur Durchführung eines Verfahrens nach einem der vorhergehenden Ansprüche.

11. Brennkraftmaschine (1) mit
- mindestens einem Brennraum (5), in dem ein Kolben (7) von einer Maximalvolumen-Position in eine Minimalvolumen-Position verlagerbar angeordnet ist, um eine Kompression eines Gasgemischs in dem Brennraum (5) zu bewirken,
- mindestens einem Motorsensor (9), der angeordnet und eingerichtet ist zur Erfassung von Vibrationen des Brennraums (5), und
- einer Steuervorrichtung (3), die mit dem Motorsensor (9) wirkverbunden und eingerichtet ist, um ein Sensorsignal des Motorsensors (9) zu empfangen, wobei
- die Steuervorrichtung (3) eingerichtet ist, um die Kompression in dem Brennraum (5) anhand des Sensorsignals des Motorsensors (9) zu bewerten.
